**Europäisches Patentamt**

**European Patent Office**

**Office européen des brevets**

(11) Veröffentlichungsnummer: **0 261 570 B1**

(19)

# EUROPÄISCHE PATENTSCHRIFT

(45) Veröffentlichungstag der Patentschrift: **18.12.91**

(51) Int. Cl.⁵: **B23K 35/30**, C21D 9/50

(21) Anmeldenummer: **87113524.0**

(22) Anmeldetag: **16.09.87**

(54) Verfahren zum Verbinden von Sphäroguss mit Stahl mittels Schmelzschweissens.

(30) Priorität: **24.09.86 CH 3819/86**

(43) Veröffentlichungstag der Anmeldung:
**30.03.88 Patentblatt 88/13**

(45) Bekanntmachung des Hinweises auf die
Patenterteilung:
**18.12.91 Patentblatt 91/51**

(84) Benannte Vertragsstaaten:
**CH DE FR GB IT LI SE**

(56) Entgegenhaltungen:
**EP-A- 0 013 323          EP-A- 0 058 450**
**DE-A- 3 542 875          DE-B- 1 207 770**
**FR-A- 2 082 025          FR-A- 2 170 059**
**FR-A- 2 251 399          US-A- 3 449 545**
**US-A- 4 426 426**

(73) Patentinhaber: **BBC Brown Boveri AG**
**Haselstrasse**
**CH-5401 Baden(CH)**

(72) Erfinder: **Breitenmoser, Georg**
**Fohrenbergstrasse 1**
**CH-8355 Aadorf(DE)**
Erfinder: **Faber, Guy**
**Buacherstrasse 11**
**CH-5452 Oberrohrdorf(CH)**

## Beschreibung

Die Erfindung bezieht sich auf ein Verfahren zum Verbinden von Sphäroguss mit Stahl mittels Schmelzschweissens. Sphäroguss wird statt Stahlguss im Maschinenbau aus fabrikationstechnischen und wirtschaftlichen Gründen eingesetzt, jedoch bereitet die Verbindungstechnologie Sphäroguss/Stahl für Zusammengesetzte Bauteile Schwierigkeiten. Dies gilt vor allem für Schweissverbindungen Sphäroguss/Stahl, da auf der niedriggekohlten Seite eine Aufkohlung mit Karbidbildung erfolgt, welche zur Bildung einer spröden, harten Zone führt, die durch Glühen nicht mehr rückgängig gemacht werden kann.

## Stand der Technik

Unter anderem ist schon vorgeschlagen worden, die Verbindung Sphäroguss/Stahl nach einer der nachfolgenden Methoden durchzuführen:

1. Entkohlen der zu verbindenden Sphärogussoberfläche in einer Tiefe von ca. 2 mm. Schweissen mit Eisenelektroden.

Dies erfordert Entkohlungsglühungen von bis zu 48 h Dauer und Temperaturen von 900 bis 950 °C. Derartige Glühungen sind aufwendig und es besteht die Gefahr starken Verzuges der Sphärogussteile.

2. Schweissen mit Fe/Ni-Elektroden mit 70 Gew.-% Ni und 30 Gew.-% Fe (Vgl. UTP-Schweissmaterial AG, CH-4310 Rheinfelden; G. Korfeld, "Zusätze zum Schweissen von Eisengusswerkstücken", Giesserei 69, 1982, S. 112-119).

Diese Methode ist nur beschränkt, meist für Reparaturarbeiten anwendbar. Das Schweissgut ist anfällig auf Warmrisse und weist nur niedrige mechanische Festigkeit auf.

3. Eingiessen der zu verbindenden Bauteile (Rohr, Stange) aus Stahl in Sphärogussteil. Die Verankerung wird durch Unebenheiten (Löcher, Wülste, Noppen etc.) im Stahlbauteil gewährleistet, ist also vorwiegend mechanischer und nicht metallurgischer Natur. Da die spröden Randzonen im Stahlbauteil unweigerlich zu grossflächigen Rissen führen, lässt sich auf diese Weise keine dichte Verbindung erzielen.

Aus US-A-4,426,426 und EP-A-0058450 ist ein Verfahren zum Schweissen von Sphäroguss mit Zusatzmaterial folgender Zusammensetzung bekannt:

$$
\begin{array}{llll}
C & < & 2 \ \% & \qquad W & \cong & 0,1 \ \% \\
Mn & < & 0,2 \ \% & \qquad Cr & \cong & 0,1 \ \% \\
Si & = & 2,5 - 3,2 \ \% & \qquad V & \leqq & 0,1 \ \% \\
Al & \leqq & 2 \ \% & \qquad Mg & \leqq & 0,1 \ \% \\
Mo & \leqq & 0,5 \ \% & \qquad S.E. & \leqq & 0,1 \ \% \\
Ni & \leqq & 30 \ \% & \qquad Fe & = & Rest
\end{array}
$$

Ein Verschweissen von Sphäroguss mit niedrig gekohltem Stahl mit einem solchen Zusatzmaterial führt an der Grenzzone Schweissmaterial/Stahl zu einer unerwünschten Schicht von hartem, sprödem Zementit.

In FR-A 2082025 ist ein Verfahren zum Schweissen von Sphäroguss mittels Doppelplasmabrenner beschrieben. Hierbei weist das verwendete Schweissgut auf der Wurzelseite der Schweissnaht folgende Zusammensetzung auf:

C = 3,22 %
Mn = 0,15 %
Si = 2,84 %
Mg = 0,019 %
Ce = 0,04 %
S = 0,008 %
P = 0,048 %
Fe = Rest

Dieses Verfahren ist für die Herstellung einer Sphäroguss/ Stahl-Verbindung nicht zu empfehlen, da die Wurzel der Schweissnaht einen viel zu hohen Kohlenstoffgehalt aufweist.

## Darstellung der Erfindung

Der Erfindung, wie sie im Patentanspruch 1 angegeben ist, liegt die Aufgabe zugrunde, ein Verfahren zum Verbinden von Sphäroguss mit Stahl mittels Schmelzschweissens anzugeben, bei dem zu Rissen und Undichtheiten führende spröde, harte Zonen vermieden werden. Das Verfahren soll mit einfachen Mitteln durchführbar und wirtschaftlich sein.

Die Aufgabe wird durch das Verfahren gemäß Anspruch 1 gelöst.

Das zum Schweissen benutzte Zusatzmaterial weist nach Anspruch 1 die nachfolgenden Zusammensetzungsgrenzen auf:

C = 0,01 - 0,12 Gew.-%
Mn = 0,2 - 1,5 Gew.-%
Si = 1 - 4 Gew.-%
Al = 0,005 - 0,1 Gew.-%
Mo = 0,2 - 0,7 Gew.-%
Ce = 0,0001 - 0,02 Gew.-%
Mg = 0,0001 - 0,01 Gew.-%
Zr = 0,01 - 0,7 Gew.-%
S = max. 0,006 Gew.-%
P = max. 0,01 Gew.-%
Fe = Rest

Bevorzugte Ausführungs formen des Verfahrens sind Gegenstand der abhängigen Ansprüche 2 bis 4.

Weg zur Ausführung der Erfindung

Die Erfindung wird anhand der nachfolgenden, durch Figuren näher erläuterten Ausführungsbeispiele beschrieben.

Dabei zeigt:

Fig. 1 einen Querschnitt durch eine Verbindung zwischen Sphäroguss und Stahl mittels mehrlagiger direkter Schweissung mit legiertem Zusatzmaterial,

Fig.2 einen Querschnitt durch eine Verbindung zwischen Sphäroguss und Stahl mittels mehrlagiger Auftragsschweissung mit legiertem Zusatzmaterial und Verbindungsschweissung mit unlegiertem Zusatzmaterial,

Fig. 3 einen Querschnitt durch eine Verbindung zwischen Sphäroguss und Stahl mittels mehrlagiger Auftragsschweissung mit legiertem und darauffolgendem unlegiertem Zusatzmaterial und Verbindungsschweissung mit unlegiertem Zusatzmaterial,

Fig. 4 einen schematischen metallographischen Querschnitt durch das Schweissgut einer Auftragsschweissung mit legiertem und unlegiertem Zusatzmaterial (Gefügeausbildung).

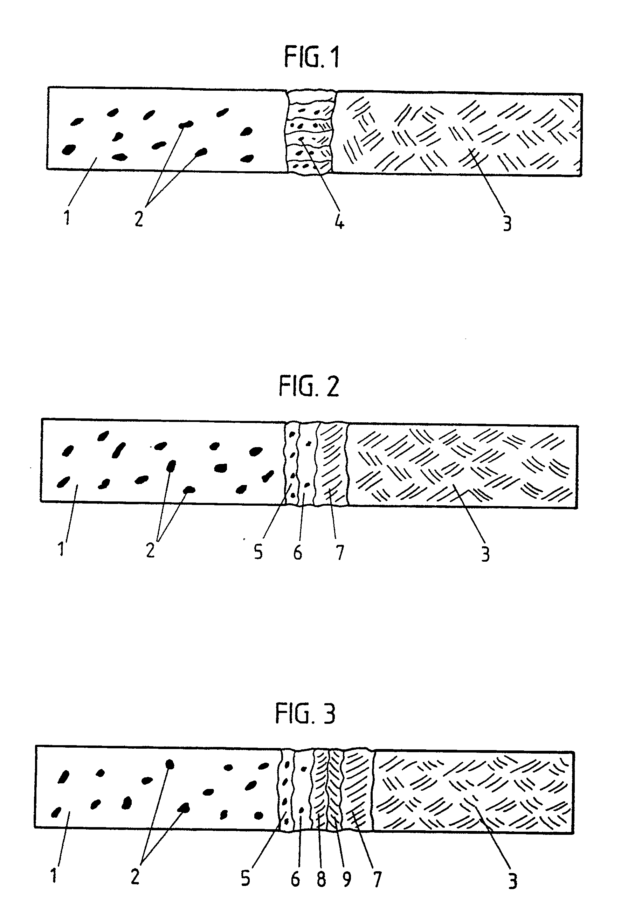

Fig. 1 zeigt eine schematische Darstellung (Querschnitt) einer Verbindung zwischen Sphäroguss und Stahl mittels einer mehrlagigen direkten Schweissung mit legiertem Zusatzmaterial. Der Einfachheit halber ist hier eine I-Naht gezeichnet. Selbstverständlich lassen sich auf diese Weise auch U-, V- oder Kehlnähte etc. ausführen. I ist eine Platte aus Sphäroguss mit dem eingelagerten globulitischen Graphit 2. 3 ist eine Platte aus Stahl (niedrig gekohlte Eisenlegierung). 4 stellt die Verbindungsschweissung mit Si-legiertem Zusatzmaterial dar, die in der Regel mehrlagig ausgeführt ist. Die verhältnismässig feinkörnigen globulitischen Graphitausscheidungen sind durch schwarze Flecken angedeutet.

In Fig. 2 ist ein Querschnitt durch eine Verbindung zwischen Sphäroguss und Stahl mittels einer mehrlagigen Auftragsschweissung mit legiertem Zusatzmaterial und einer Verbindungsschweissung mit unlegiertem Zusatzmaterial schematisch dargestellt. Die Platte aus Sphäroguss 1 mit dem globulitischen Graphit 2 weist eine Auftragsschweissung mit Silegiertem Zusatzmaterial auf. 5 entspricht einer 1. Lage und 6 einer 2. Lage dieser Auftragsschweissung. Die eigentliche Verbindungsschweissung 7 ist mit unlegiertem Zusatzmaterial ausgeführt. 3 ist die Platte aus Stahl.

Fig. 3 zeigt schematisch einen Querschnitt durch eine Verbindung zwischen Sphäroguss und Stahl mittels einer mehrlagigen Auftragsschweissung bestehend aus Schweissgut mit legiertem und darauffolgendem unlegiertem Zusatzmaterial und einer Verbindungsschweissung mit unlegiertem Zusatzmaterial. Die Bezugszeichen 1, 2, 3, 5, 6 und 7 entsprechen genau denjenigen der Fig. 2. Zusätzlich zur Auftragsschweissung 5, 6 mit legiertem Zusatzmaterial ist noch eine weitere zweilagige Auftragsschweissung mit unlegiertem Zusatzmaterial vorhanden. 8 entspricht einer 1. Lage und 9 einer 2. Lage dieser Auftragsschweissung.

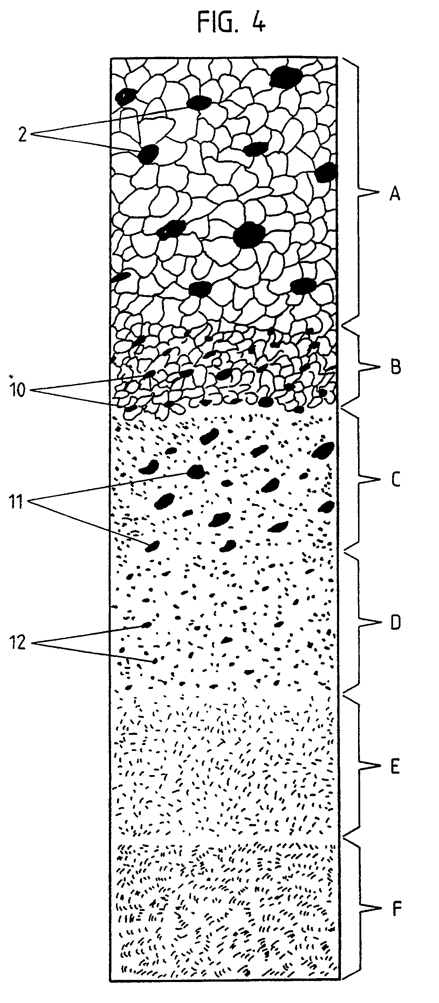

In Fig. 4 ist ein schematischer metallographischer Querschnitt durch das Schweissgut einer Auftragsschweissung mit legiertem und unlegiertem Zusatzmaterial dargestellt. Die Darstellung zeigt den zonenweisen Aufbau der Gefügeausbildung. 2 ist das globulitische Graphit des thermisch unveränderten Sphärogusses im Ausgangszustand. 10 stellt den globulitischen Graphit der wieder erkalteten, erstarrten Aufschmelzzone des Sphärogusses dar. 11 ist der globulitische Graphit der 1. Lage der Auftragsschweissung mit Si-legiertem Zusatzmaterial, während 12 den entsprechenden Graphit der 2. Lage mit dem gleichen Zusatzmaterial zeigt. A ist die Zone des unveränderten Sphärogusses. B stellt das erfasst Material der Aufschmelzzone des Sphärogusses dar. C ist das Schweissgut der 1. Lage der Auftragsschweissung mit Si-legiertem Zusatzmaterial. D entspricht dem Schweissgut der 2. Lage der Auftragsschweissung mit dem gleichen Zusatzmaterial. E ist das Schweissgut der 1. Lage der Auftragsschweissung und F dasjenige der 2. Lage der Auftragsschweissung mit unlegiertem Zusatzmaterial. Die Figur erklärt sich im übrigen von selbst. Es soll noch darauf aufmerksam gemacht werden, dass in keiner der Zonen grössere harte und spröde Karbidausscheidungen vorkommen. Die Grundmassen aller Zonen sind vorwiegend ferritischer bzw. ferritisch-perlitischer Natur.

Ausführungsbeispiel I:

Siehe Fig. 1!

Es wurden Platten aus Sphäroguss 1 und niedriggekohltem Stahl 3 durch direktes Lichtbogen-Schweissen mit Si-legiertem Zusatzmaterial miteinander verbunden. Die Platten hatten folgende Abmessungen:

Breite = 100 mm
Länge = 200 mm
Dicke = 20 mm
Der Sphäroguss hatte folgende Zusammensetzung:
C = 3,2 Gew.-%
Si = 1,9 Gew.-%
Mn = 0,6 Gew.-%
Ni = 1,4 Gew.-%
Mg = 0,06 Gew.-%
Fe + Verunreinigungen = Rest
Der Stahl 3 mit der Handelsbezeichnung St 37 gemäss DIN 17100 hatte die nachfolgende Zusammensetzung:
C        0,2 Gew.-%
P        0,05 Gew.-%
S        0,05 Gew.-%
Fe + Si + Mn = Rest
Die chemische Zusammensetzung der Schweisselektrode und der entsprechenden Elektrodenumhüllung war derart abgestimmt, dass sich bei der Lichtbogen-Schweissung ein Schweissgut der nachfolgenden Zusammensetzung ergab:
C = 0,08 Gew.-%
Mn = 0,45 Gew.-%
Si = 3,0 Gew.-%
Al = 0,0075 Gew.-%
Mo = 0,55 Gew.-%
Ce = 0,0013 Gew.-%
Mg = 0,0006 Gew.-%
Zr = 0,04 Gew.-%
S = 0,004 Gew.-%
P = 0,01 Gew.-%
Fe = Rest
Die zu verschweissenden Platten wurden vor dem Schweissvorgang auf ca. 400 °C vorgewärmt und der Schweissbereich auf 350 bis 500 °C gehalten. Nach Fertigstellung der Schweissnaht wurde das Werkstück ohne abzukühlen sofort auf eine Glühtemperatur von 700 bis 710 °C aufgeheizt und diese Temperatur während 6 h gehalten. Dabei wandelten sich allfällige, in der Schweisszone gebildete Karbide in Temperkohle um (siehe auch Fig. 4!). Danach wurde das Werkstück im Ofen abkalten gelassen.
Aus dem Werkstück wurden Probestücke herausgearbeitet. Die Zugprobe und die Hochkant-Biegeprobe ergaben, dass der Bruch immer ausserhalb der Schweissnaht bzw. der Uebergangszone, nämlich im unveränderten Gefüge des Sphärogrusses erfolgte. Es wurden Streckgrenzen von ca. 300 MPa, Zugfestigkeiten von ca. 400 MPa und Biegewinkel bis zu 35 ° erreicht.

Ausführungsbeispiel II:

Vergleiche Fig. 1!

An ein Pumpengehäuse aus Sphäroguss wurde nachträglich ein Stahlrohr angeschweisst. Letzterer hatte folgende Abmessungen:
Aussendurchmesser = 48 mm
Innendruchmesser = 40 mm
Wandstärke = 4 mm
Der Sphäroguss mit der Handelsbezeichnung CCC 40 hatte folgende Zusammensetzung:
C = 2,9 Gew.-%
Si = 2,7 Gew.-%
Mn = 0,5 Gew.-%
P = 0,08 Gew.-%
S = 0,015 Gew.-%
Fe = Rest
Der Werkstoff des Stahlrohres mit der Handelsbezeichnung St.35.8 gemäss DIN 17175 hatte die nachfolgende Zusammensetzung:
C        0,17 Gew.-%
Si = 0,1 bis 0,35 Gew.-%
Mn = 0,4 bis 0,8 Gew.-%
P        0,04 Gew.-%
S        0,04 Gew.-%
Die Werkstücke wurden zunächst auf 380 bis 400 °C vorgewärmt und dann das Rohr mit einer üblichen Kehlnaht mit einer legierten Schweisselektrode der Zusammensetzung gemäss Beispiel I an das Pumpengehäuse angeschweisst. Dann wurde das Werkstück ohne Abkalten direkt auf eine Temperatur von 720 bis 750 °C erwärmt und bei dieser Temperatur während 4 h geglüht.
Das in der Längsrichtung aufgeschnittene Rohr wurde einer Biegeprobe unterworfen. Sowohl die konkave sowie die konvexe Hälfte des Rohrstutzens (in Biegerichtung gesehen) konnte anstandslos um 90° ohne Anriss abgebogen werden.

Ausführungsbeispiel III:

Siehe Fig. 2!

Platten aus Sphäroguss und niedriggekohltem Stahl 3 wurden durch Auftragsschweissen (5, 6) und Verbindungsschweissen (7) nach dem Lichtbogen-Schweissverfahren zu einem Werkstück vereinigt. Die Abmessungen der Platten entsprechen denjenigen von Beispiel I. Der Sphäroguss mit der Handelsbezeichnung GGG 40 hatte die Zusammensetzung gemäss Beispiel II, der Stahl mit der Handelsbezeichnung St 37 diejenige gemäss Beispiel I.
Zunächst wurden auf eine Stirnseite der Sphärogussplatte (1) zwei Lagen (5, 6) Schweissgut aus Si-legiertem Zusatzmaterial von je 3 mm Dicke gemäss Zusammensetzung nach Beispiel I aufgebracht. Der Sphäroguss wurde vorgängig auf eine Temperatur von ca. 375 °C vorgewärmt. Dann wurde eine mehrlagige Verbindungsschweissung 7 zwischen dem derart durch Auftragsschweissung vorbereiteten Sphäroguss 1 und dem Stahl 3 mittels einer unlegierten Elektrode durchgeführt. Die Schweisselektrode hatte die nachfolgende Zusammensetzung:
C = 0,03 bis 0,04 Gew.-%
Si = 0,3 Gew.-%
Mn = 0,6 Gew.-%
Fe + Verunreinigungen = Rest
Am Schluss wurde das Werkstück ohne abzukalten während 5 h bei einer Temperatur von 730 °C geglüht.
Die Proben ergaben folgendes Bild:
Streckgrenze ca. 320 MPa
Zugfestigkeit ca. 420 MPa
Biegewinkel ca. 40°

Ausführungsbeispiel IV:

In Anlehnung an Beispiel III, jedoch mit anderer, teilweise umgekehrter Schichtfolge wurde in einem Dampfturbinenzylinder aus Sphäroguss mit der Handelsbezeichnung GGG 40 ein Stahlrohr mit der Handelsbezeichnung St 35.8 "ein gegossen". Dabei wurde das einzugiessende Rohr an dem mit dem Sphäroguss zu verbindenden Teil auf 200 °C vorgewärmt und über eine Breite von 10 mm mit einer 2 mm dicken Lage Auftragsschweissung aus Si-legiertem Zusatzmaterial gemäss Zusammensetzung nach Beispiel I versehen. Nach Abkühlen wurde das Rohr derart in die Giessform eingelegt, dass sein Ende in den von der Schmelze auszufüllenden Raum vorragte und mit obigem Sphärogussmaterial umgossen. Das Si-legierte Schweissgut bewirkt, dass beim Abkühlen der Kohlenstoff in der Uebergangszone nicht als eisenkarbidreiche Phase vorliegt, sondern die Temperkohle ausgeschieden wird. Dadurch wird vermieden, dass in der Uebergangszone beim vollständigen Erkalten des Werkstückes oder nachträglich im Betrieb Risse entstehen.

Ausführungsbeispiel V:

Vergleiche Fig. 3 und 4!

An einem Gussstück aus Sphäroguss 1 der Zusammensetzung gemäss Beispiel I wurden nach Vorwärmung auf 375 °C in der Giesserei folgende vorbereitenden Arbeiten durchgeführt:
- Zweilagige Auftragsschweissung (5, 6) von je 3 mm Dicke pro Lage mit Si-legiertem Zusatzwerkstoff der Zusammensetzung gemäss Beispiel I.
- Zweilagige Auftragsschweissung (8, 9) von je 2,5 mm Dicke pro Lage mit unlegiertem Zusatzwerkstoff der Zusammensetzung gemäss Beispiel III.
- Glühen des Werkstücks während 6 h bei einer Temperatur von 740 °C.
- Langsame Abkühlung des Werkstücks im Ofen.

Dabei wies die oberste Lage der Auftragsschweissung mit unlegiertem Zusatzmaterial nur noch einen C-Gehalt von ca. 0,2 bis 0,4 Gew.-% auf.

Nun wurde das Werkstück in die Maschinenfabrik übergeführt. Dort wurden an den Stellen der Auftragsschweissung nach einer Vorwärmung auf 250 °C Bauteile aus St. 37 (3) mit unlegierten Eisenelektroden angeschweisst. Eine nachträgliche, zusätzliche Wärmebehandlung erübrigte sich.

Bruchproben aus den Verbundzonen ergaben, dass das Material stets ausserhalb des Schweissgutes und der Uebergangszonen anriss. Es wurden Werte der Streckgrenze von durchschnittlich 330 MPa und solche der Zugfestigkeit von durchschnittlich 440 MPa erzielt. Biegewinkel in angeschweissten Stäben und Rohren ergaben Werte von 60 bis 90° ohne Bruch.

Das Verfahren ist nicht auf die Ausführungsbeispiele beschränkt. Grundsätzlich können auf diese Weise hochgekohlte, den Kohlenstoff in elementarer Form enthaltende Eisenwerkstoffe mit niedriggekohlten Eisenwerkstoffen verbunden werden.

Als Zusatzmaterial für die direkte Verbindungsschweissung bzw. die Auftragsschweissung auf dem hochgekohlten Werkstoff wird vorteilhafterweise eine Eisenlegierung mit 2 bis 4 Gew.-% Silizium verwendet. Das Zusatzmaterial soll zusätzlich im Kerndraht und/oder in der Umhüllung Impfstoffe aufweisen, welche die Ausscheidung des Kohlenstoffs in globulitischer Form in der Schweisszone (eigentliche Schweissnaht und Uebergangszonen) gewährleisten. Als Zusatzmaterial wird vorzugsweise eine Schweisselektrode für Lichtbogen-Schweissung verwendet.

Das Verfahren kann als direktes Verbindungsverfahren mit Si-legiertem Zusatzmaterial oder als Verfahren mit einer oder mehreren Auftragsschweissungen (2 bis 3 Lagen) mit legiertem und unlegiertem Zusatzmaterial durchgeführt werden. In den letzteren Fällen kann die eigentliche Verbindungsschweissung mit einem herkömmlichen unlegierten Zusatzmaterial erfolgen. Die Auftragsschweissung kann in der Giesserei vorgenommen werden, wobei in der Regel Vorbereitungen wie mechanische Bearbeitung oder Aetzen entfallen können. Die durch Schmelzschweissen verbundenen Werkstücke werden vorzugsweise bei 700 bis 750 °C während 1/2 bis 6 h geglüht. Dies gilt auch für Teilschritte, z.B. nach dem Auftragsschweissen. Dabei werden Karbide mit Sicherheit in globulitische Temperkohle verwandelt. Zweckmässigerweise werden die Werkstücke vor dem Schmelzschweissen auf eine Temperatur von 250 bis 500 °C vorgewärmt.

**Patentansprüche**

1. Verfahren zum Verbinden von Sphäroguss mit Stahl mittels Schmelzschweissens, dadurch gekennzeichnet, dass als Zusatzmaterial eine Eisenlegierung mit einem höheren Siliziumgehalt mit nachfolgender Zusammensetzung verwendet wird:

C = 0,01 - 0,12 Gew.-%

Mn = 0,2 - 1,5 Gew.-%
Si = 1 - 4 Gew.-%
Al = 0,005 - 0,1 Gew.-%
Mo = 0,2 - 0,7 Gew.-%
Ce = 0,0001 - 0,02 Gew.-%
Mg = 0,0001 - 0,01 Gew.-%
Zr = 0,01 - 0,7 Gew.-%
S = max. 0,006 Gew.-%
P = max. 0,01 Gew.-%
Fe = Rest

2. Verfahren nach Anspruch 1, dadurch gekennzeichnet, dass vor dem eigentlichen Verbinden zunächst 2 bis 3 Lagen von Zusatzmaterial mit einem Siliziumgehalt von 2 bis 4 Gew.-% auf den Sphäroguss als Auftragsschweissung aufgetragen werden und daraufhin eine Verbindungsschweissung mit bis zu 2 weiteren Lagen an unlegiertem Zusatzmaterial vorgenommen wird.

3. Verfahren nach Anspruch 2, dadurch gekennzeichnet, dass die Auftragsschweissung auf den Sphäroguss in der Giesserei ohne wesentliche vorherige Vorbereitung wie mechanische Bearbeitung oder Aetzung direkt am geputzten Rohgussteil durchgeführt wird.

4. Verfahren nach Anspruch 1, dadurch gekennzeichnet, dass die durch Schmelzschweissen verbundenen Werkstücke zusätzlich einer Glühung bei 700 bis 750 °C während einer Dauer von 1/2 bis 6 h zur globulitischen Ausscheidung des Kohlenstoffs in Form von Temperkohle in der Schweisszone und in den benachbarten Zonen unterworfen werden.

## Claims

1. Method for joining nodular cast iron to steel by means of fusion welding, characterised in that an iron alloy with a higher silicon content having the following composition:
C = 0.01 - 0.12% by weight
Mn = 0.2 - 1.5 % by weight
Si = 1 - 4 % by weight
Al = 0.005 - 0.1 % by weight
Mo = 0.2 - 0.7 % by weight
Ce = 0.0001 - 0.02% by weight
Mg = 0.0001 - 0.01% by weight
Zr = 0.01 - 0.7 % by weight
S = 0.006% by weight max.
P = 0.01 % by weight max.
Fe = remainder
is used as filler.

2. Method according to Claim 1, characterised in that, before the actual joining, first 2 to 3 layers of filler with a silicon content of 2 to 4% by weight are applied to the nodular cast iron as build-up welding and a weld joining is then carried out with up to 2 further layers of unalloyed filler.

3. Method according to Claim 2, characterised in that the build-up welding on the nodular cast iron is executed in the foundry directly on the cleaned raw casting without substantial preliminary preparation such as mechanical machining or etching.

4. Method according to Claim 1, characterised in that the workpieces joined by fusion welding are additionally subjected to annealing at 700 to 750 °C for a duration of 1/2 to 6 h for the purpose of globular precipitation of the carbon in the form of temper carbon in the welding zone and in the adjacent zones.

## Revendications

1. Procédé pour l'assemblage de la fonte nodulaire à l'acier par la technique du soudage par fusion, caractérisé en ce que l'on utilise comme matériau d'apport un alliage ferreux avec une teneur en silicium élevée et présentant la composition pondérale suivante:

C = 0,01 - 0,12 %
Mn = 0,2 - 1,5 %
Si = 1 - 4 %
Al = 0,005 - 0,1 %
Mo = 0,2 - 0,7 %
Ce = 0,0001 - 0,02 %
Mg = 0,0001 - 0,01 %
Zr = 0,01 - 0,7 %
S = max. 0 006 %
P = max. 0,01 %
Fe = reste.

2. Procédé suivant la revendication 1, caractérisé en ce qu'avant l'assemblage proprement dit, on dépose d'abord 2 à 3 couches de matériau d'apport avec une teneur en silicium de 2 à 4 % en poids sur la fonte nodulaire en guise de soudure de rechargement et en ce que l'on exécute ensuite une soudure d'assemblage avec jusqu'à 2 couches de matériau d'apport non allié.

3. Procédé suivant la revendication 2, caractérisé en ce que le soudage de rechargement sur la fonte nodulaire est effectué en fonderie, directement sur la pièce en fonte brute ébarbée, sans préparation préalable réelle comme un usinage mécanique où un décapage.

4. Procédé suivant la revendication 1, caractérisé en ce que les pièces assemblées par la technique du soudage par fusion sont en plus soumises à un recuit à 700 - 750°C pendant une durée de ½ h à 6 h pour provoquer la précipitation globulaire du carbone sous la forme de carbone de recuit dans la zone du soudage et dans les zones voisines.

## FIG. 1

## FIG. 2

## FIG. 3

## FIG. 4